# EUROPÄISCHE PATENTSCHRIFT

(11) **EP 3 450 803 B1**
(45) Veröffentlichungstag und Bekanntmachung des Hinweises auf die Patenterteilung: **18.03.2020**
(21) Anmeldenummer: 18191364.1
(22) Anmeldetag: 29.08.2018
(51) Int. Cl.: F16J 15/3296

(54) **DICHTUNGSANORDNUNG UND DICHTUNG DARAUS**
SEAL ARRANGEMENT AND SEAL MADE FROM SAME
DISPOSITIF D'ÉTANCHÉITÉ ET JOINT CORRESPONDANT

(30) Priorität: 04.09.2017 DE 102017008314
(43) Veröffentlichungstag der Anmeldung: 06.03.2019
(73) Patentinhaber: Carl Freudenberg KG, 69469 Weinheim (DE)
(72) Erfinder: Nahrwold, Olaf, 67071 Ludwigshafen (DE); Sindlinger, Stefan, Dr., 69469 Weinheim (DE); Lauer, Frank, 69231 Rauenberg (DE); TRABER, Boris, 69493 Hirschberg (DE); Menzel, Jasmin, 69469 Weinheim (DE); Kramer, Thomas, 64668 Zotzenbach (DE)

(56) Entgegenhaltungen:
- EP-A1- 3 312 480
- DE-A1-102007 007 405
- DE-B3-102010 040 686

## Beschreibung

### Technisches Gebiet

Die Erfindung betrifft eine Dichtungsanordnung, umfassend einen Dichtring mit zumindest einer dynamisch beanspruchten Dichtlippe und ein abzudichtendes Maschinenelement mit einer abzudichtenden Oberfläche, die elektrisch leitfähig und von der Dichtlippe mit radialer Vorspannung dichtend umschlossen ist, wobei der Dichtring einen Kern aus einem elektrisch leitfähigen Werkstoff und einen Mantel aus einem elektrisch isolierenden Werkstoff aufweist, wobei der Mantel eine Materialstärke aufweist, den Kern zumindest teilweise umschließt und die Dichtlippe umfasst und einen Verschleißdetektor, umfassend eine elektrische Messvorrichtung zur Erfassung des Verschleißzustands des Dichtrings.
Außerdem betrifft die Erfindung einen Dichtring aus der Dichtungsanordnung, wie zuvor beschrieben.

### Stand der Technik

Eine solche Dichtungsanordnung und ein solcher Dichtring sind in der älteren Anmeldung DE 10 2016 012 552.7 offenbart.

Der elektrisch isolierende Mantel weist eine Materialstärke auf, die in allen Umfangsbereichen um den elektrisch leitfähigen Kern herum konstant ist. Der Mantel weist dabei eine verhältnismäßig geringe Materialstärke auf und liegt flächig am Kern an.

Der Verschleißdetektor umfasst eine elektrische Messvorrichtung, die als kapazitive Messvorrichtung ausgebildet ist. Ein solches Messprinzip beruht darauf, dass zwischen der abzudichtenden Oberfläche des abzudichtenden Maschinenelements und dem Kern des Dichtrings eine elektrische Spannung angelegt und die elektrische Kapazität zwischen der abzudichtenden Oberfläche und dem Kern ermittelt wird. Einflussgrößen der elektrischen Kapazität sind die Dielektrizitätskonstante des Mantels sowie der radiale Abstand zwischen der abzudichtenden Oberfläche und dem Kern.

Dichtringe mit einer Dichtlippe aus einem Dichtungswerkstoff, insbesondere dynamisch beanspruchte Dichtlippen, nutzen sich während der bestimmungsgemäßen Verwendung des Dichtrings ab. Eine solche Abnutzung kann dazu führen, dass es zunächst zu einer Leckage in der Dichtungsanordnung und anschließend zu einem Ausfall des gesamten Dichtsystems kommt.

Ändert sich mit zunehmendem Verschleiß die Materialstärke der Dichtlippe, die ein Bestandteil des Mantels ist, ändert sich auch die elektrische Kapazität zwischen der abzudichtenden Oberfläche und dem Kern des Dichtrings, wobei diese Änderung der elektrischen Kapazität durch eine geeignete Auswerteelektronik erfasst wird.

Wie in der älteren Anmeldung offenbart, sind dadurch auch allmähliche Veränderungen im Betriebsverhalten des Dichtrings und allmählicher Verschleiß der Dichtlippe erfassbar. Der Zustand des Dichtrings wird demnach permanent überwacht.

Eine weitere Dichtungsanordnung ist aus der DE 10 2007 007 405 B4 bekannt. Die vorbekannte Dichtungsanordnung umfasst einen dynamisch beanspruchten Dichtring und eine elektrische Einrichtung zur Erkennung des Verschleißzustands des Dichtrings, wobei der Dichtring aus einem elektrisch leitfähigen ersten Dichtmaterial besteht, an dem ein elektrisch nicht leitendes zweites Dichtmaterial angebracht ist, das in dichtendem Kontakt mit der abzudichtenden Oberfläche eines abzudichtenden Maschinenelements ist. Die abzudichtende Oberfläche ist, wie das erste Dichtmaterial auch, elektrisch leitfähig.

Bei vollständigem Verschleiß des zweiten Dichtmaterials kommt die elektrisch leitfähige, abzudichtende Oberfläche in Berührung mit dem ebenfalls elektrisch leitfähigen ersten Dichtmaterial, und ein Stromkreis zur Anzeige des vollständigen Verschleißes, also zur Anzeige der Zerstörung des Dichtrings, wird geschlossen.

Bei einer solchen Ausgestaltung einer Dichtungsanordnung ist zu beachten, dass keine allmähliche Zustandsänderung des Dichtrings erfassbar ist. Durch ein Schließen des Stromkreises wird ausschließlich angezeigt, dass der Dichtring nicht mehr gebrauchsfähig ist und sofort ausgetauscht werden muss.

### Darstellung der Erfindung

Der Erfindung liegt die Aufgabe zugrunde, eine Dichtungsanordnung und einen Dichtring der eingangs genannten Art jeweils derart weiterzuentwickeln, dass eine permanente Zustandsüberwachung des Dichtrings möglich ist, dass die elektrische Messvorrichtung die für die permanente Zustandsüberwachung verwendet wird, besonders exakte Messergebnisse liefert und dass insbesondere störende Einflüsse, die die Genauigkeit des Messergebnisses nachteilig beeinflussen können, wie zum Beispiel Störkapazitäten, weitestgehend minimiert sind. Diese Aufgabe wird erfindungsgemäß mit den Merkmalen der Ansprüche 1 und 10 gelöst. Auf vorteilhafte Ausgestaltungen nehmen die Unteransprüche Bezug. Zur Lösung der Aufgabe ist es vorgesehen, dass, im Schnitt betrachtet, die Materialstärke der Dichtlippe in radialer Richtung geringer als die Materialstärke des übrigen Mantels ist.

Hierbei ist von Vorteil, dass im Wesentlichen nur die sich betriebsbedingt in radialer Richtung verringernde Materialstärke der Dichtlippe Einfluss auf das Messergebnis der elektrischen Messvorrichtung hat.

Bezogen auf die relativ geringste Materialstärke der Dichtlippe sorgt die relativ größere Materialstärke des übrigen Mantels dafür, dass Störeinflüsse, die die Messgenauigkeit des Messergebnisses nachteilig beeinflussen könnten, praktisch eliminiert sind. Solche unerwünschten kapazitiven Störeinflüsse aus zur Dichtlippe benachbarten Bereichen könnten ohne Abschirmung durch die größere Materialstärke des übrigen Mantels in die Messung zur Erfassung des Verschleißzustands des Dichtrings einfließen und würden das Messergebnis nachteilig verfälschen. Störeinflüsse könnten zum Beispiel vom Gehäuse ausgehen, das den Dichtring umschließt oder vom abzudichtenden Medium. Eine verlässliche Erfassung des jeweils aktuellen Verschleißzustands des Dichtrings und damit der gesamten Dichtungsanordnung wäre dann nicht mehr möglich.

Die Materialstärke des Mantels ist bevorzugt an den jeweiligen Anwendungsfall derart angepasst, dass dort, wo störende kapazitive Größen entstehen können, die Materialstärke des Mantels vergrößert ist. Nur dort, wo die eigentliche, kapazitive Messung stattfindet, nämlich an einer Messstelle, die in radialer Richtung beiderseits der Dichtlippe durch die abzudichtende Oberfläche radial einerseits und den Kern radial andererseits begrenzt ist, ist die Materialstärke der Dichtlippe aus elektrisch isolierendem Werkstoff vergleichsweise am geringsten.

Dadurch, dass keine unerwünschten kapazitiven Störeinflüsse in die Messung mittels der elektrischen Messvorrichtung eingehen, ist die Genauigkeit des Messergebnisses besonders groß.

Der Kern kann aus einem elastomeren Werkstoff bestehen, insbesondere aus üblichen Dichtungswerkstoffen.

Der elastomere Werkstoff kann zum Beispiel durch elektrisch leitfähige Partikel elektrisch leitfähig gemacht werden. Solche Partikel können beispielsweise metallische Partikel sein.

Der Mantel kann ebenfalls aus einem elastomeren Werkstoff oder aus einem PTFE-Werkstoff oder aus einem anderen polymeren Werkstoff, wie zum Beispiel PTFE, PEEK oder PPS, bestehen.

Bestehen der Kern und der Mantel beide aus einem elastomeren Werkstoff, haften Kern und Mantel aufgrund des ähnlichen Materials, aus dem sie bestehen, besonders gut stoffschlüssig aneinander an.

Besteht der Mantel demgegenüber aus einem PTFE-Werkstoff, hat die Dichtlippe einen besonders geringen Haftreibungskoeffizient und weist eine hohe chemische Beständigkeit auf. Eine Dichtlippe aus einem PTFE-Werkstoff ist insgesamt besonders verschleißbeständig.

Nach einer vorteilhaften Ausgestaltung kann es vorgesehen sein, dass der übrige Mantel eine größte Materialstärke aufweist, wobei das Verhältnis aus größter Materialstärke zur Materialstärke der Dichtlippe zumindest 5, weiter bevorzugt 5 bis 10 beträgt. Ein solches Verhältnis zeigt, dass die Materialstärke des übrigen Mantels deutlich größer als die Materialstärke der Dichtlippe ist. Durch die Vergleichsweise große Materialstärke und daraus resultierend durch die gute Abschirmung von äußeren Störkapazitäten ist die betriebsbedingte Zustandsänderung der Dichtlippe und damit die betriebsbedingte Änderung der Dichtwirkung des Dichtrings und deshalb der gesamten Dichtungsanordnung besonders genau erfassbar.

Ein zu frühzeitiger Austausch eines noch ordnungsgemäß funktionierenden Dichtrings oder eine für den Benutzer überraschend auftretende Beschädigung/Zerstörung des Dichtrings kommt durch die hohe Messgenauigkeit nicht mehr vor.

Die Materialstärke des Mantels kann, ausgehend von der Dichtlippe, in radialer und/oder axialer Richtung, zumindest anfangs, stetig zunehmen. Sprunghafte Richtungsänderungen, die zu Kerbspannungen im Werkstoff des Dichtrings und damit zu einem vorzeitigen Ausfall der Dichtungsanordnung führen könnten, werden dadurch vermieden.

Erfindungsgemäß ist der Mantel, im Schnitt betrachtet, im Wesentlichen U-förmig ausgebildet und weist zwei sich im wesentlichen in radialer Richtung erstreckende Stirnseiten auf, zwischen denen, in axialer Richtung betrachtet, der Kern angeordnet ist. Dadurch wird der elektrisch leitende Kern vom elektrisch isolierenden Mantel praktisch umhüllt. Nur im Bereich der Dichtlippe hat der elektrisch isolierende Mantel eine geringste Materialstärke. In allen übrigen Bereichen, nämlich außerhalb der Messstelle, weist der isolierende Mantel demgegenüber eine größere Materialstärke auf, um äußere Störkapazitäten von der Messstelle fern zu halten und die Messgenauigkeit zu erhöhen.

Die Stirnseiten weisen jeweils eine axiale Dicke auf, die im Wesentlichen der axialen Dicke des Kerns entspricht. Störkapazitäten die zum Beispiel von einem Gehäuse ausgehen, in dem der Dichtring angeordnet ist, werden durch die vergleichsweise dicken Stirnseiten des Mantels von der Messstelle bestens abgeschirmt, ebenso wie vom Kern, der sich axial zwischen den Stirnseiten befindet.

Der Kern ist kreisringförmig ausgebildet und weist auf der der Dichtlippe radial zugewandten Seite, im Schnitt betrachtet, bevorzugt eine zur Dichtlippe im Wesentlichen kongruente Gestalt auf.
Der Kern kann auf der der Dichtlippe radial zugewandten Seite, im Schnitt betrachtet, im Wesentlichen kegelförmig ausgebildet sein. Durch eine solche Ausgestaltung weist der Dichtring insgesamt einen einfachen Aufbau auf. Durch Anpassen des Kegelwinkels des Kerns und durch die U-förmige Ausgestaltung des Mantels können die gewünschte Materialstärke des Mantels um die Messstelle herum und die abschirmende Wirkung des Mantels besonders einfach an die jeweiligen Gegebenheiten des Anwendungsfalles angepasst werden.
Wird der Kegelwinkel des Kerns auf der der Dichtlippe radial zugewandten Seite verringert, nimmt die Materialstärke des Mantels außerhalb der Dichtlippe/ außerhalb der Messstelle vergleichsweise schnell zu, ebenso wie die Wirksamkeit der Abschirmung unerwünschter Störkapazitäten.
Ist der Kegelwinkel demgegenüber vergleichsweise groß, kann auch die Dichtlippe und damit die Messstelle, in axialer Richtung betrachtet, verbreitet werden.

Der Dichtring kann in axialer Richtung mittig eine gedachte Radialebene aufweisen und symmetrisch zur Radialebene ausgebildet sein. Hierbei ist von Vorteil, dass ein solcher Dichtring besonders einfach herstellbar und beidseitig in die Dichtungsanordnung montierbar ist. Die Gefahr von Montagefehlern ist minimiert.
Die elektrische Messvorrichtung ist bevorzugt, wie zuvor beschrieben, als kapazitive Messvorrichtung zur kontinuierlichen Erfassung der Materialstärke der Dichtlippe in radialer Richtung ausgebildet. Durch die kontinuierliche Erfassung der Materialstärke der Dichtlippe in radialer Richtung kündigt sich ein bevorstehender Ausfall des Dichtrings so rechtzeitig an, dass vom Betreiber der Dichtungsanordnung rechtzeitig vorher Vorkehrungen zum Beispiel für eine rasche Reparatur getroffen werden können.
Verglichen mit einer elektrischen Messvorrichtung, die einen Ausfall eines Dichtrings/einer Dichtungsanordnung erst dann anzeigt, wenn er tatsächlich bereits eingetreten ist, ist das von großem Vorteil.

Die kapazitive Messvorrichtung umfasst eine Messstelle, die in radialer Richtung beiderseits der Dichtlippe durch die abzudichtende Oberfläche radial einerseits und der Kern radial andererseits begrenzt ist. Im Bereich der Messstelle ist die Materialstärke der Dichtlippe aus elektrisch isolierendem Werkstoff am geringsten.

Die zuvor beschriebene Dichtungsanordnung mit dem zuvor beschriebenen Dichtring kann in der Hydraulik oder Pneumatik Verwendung finden, ebenso in der chemischen Industrie, in der Lebensmittel- und Getränke-Industrie.
Die Dichtungsanordnung und der Dichtring daraus können besonders bevorzugt als Schaftdichtung für Ventile zur Anwendung gelangen.

### Kurzbeschreibung der Zeichnung

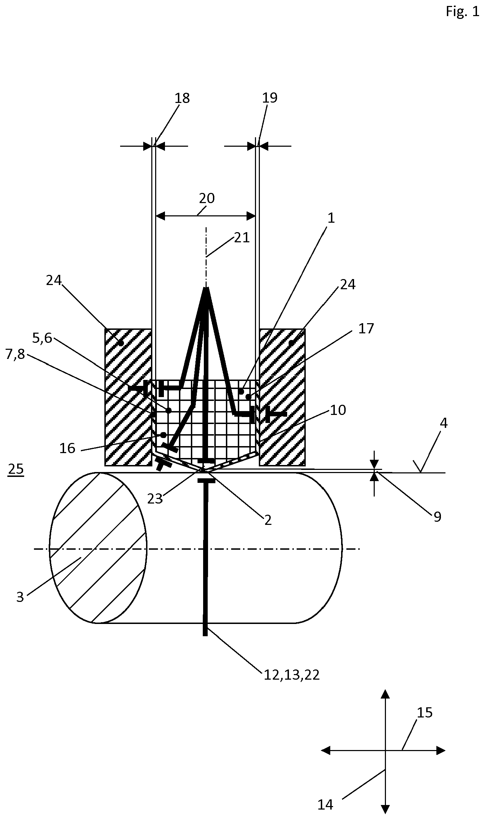

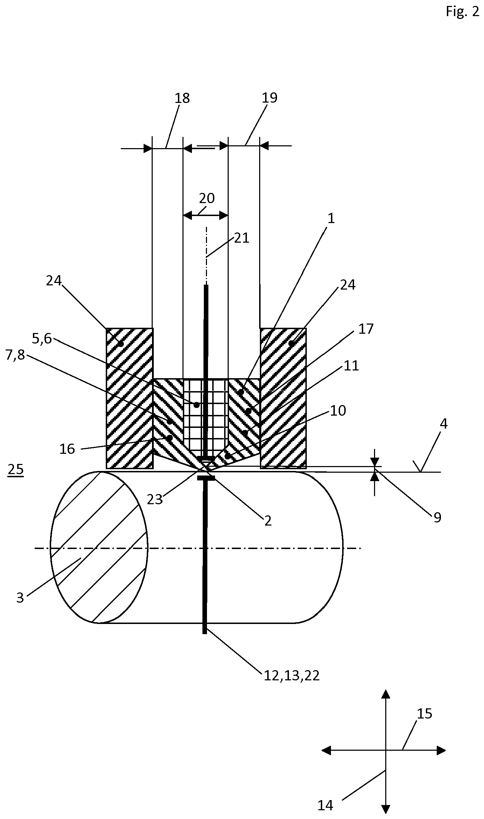

In den Figuren 1 und 2 sind zwei Ausführungsbeispiele von Dichtungsanordnungen schematisch dargestellt.
- In Figur 1: ist eine Dichtungsanordnung zeigt, wie in der eingangs genannten älteren Anmeldung offenbart,
- Figur 2: zeigt ein Ausführungsbeispiel einer erfindungsgemäßen Dichtungsanordnung, in der ein erfindungsgemäßer Dichtring zur Anwendung gelangt.

### Ausführung der Erfindung

In Figur 1 ist ein Ausführungsbeispiel gezeigt, wie es in der eingangs genannten älteren Anmeldung offenbart ist.

Die Dichtungsanordnung umfasst einen Dichtring 1 mit einer dynamisch beanspruchten Dichtlippe 2, die eine abzudichtende Oberfläche 4 eines abzudichtenden Maschinenelements 3 mit radialer Vorspannung dichtend umschließt.

Die abzudichtende Oberfläche 4 ist elektrisch leitfähig.

Der Dichtring 1 umfasst einen Kern 5, der von einem Mantel 7 im Bereich seiner Stirnseiten 16, 17 und auf der der abzudichtenden Oberfläche 4 zugewandten Seite umhüllt ist.
Der Kern 5 besteht aus einem elektrisch leitfähigen Werkstoff 6, der Mantel 7 demgegenüber aus einem elektrisch isolierenden Werkstoff 8.

Schematisch angedeutet ist ein Verschleißdetektor 12, der eine elektrische Messvorrichtung 13 zur Erfassung des Verschleißzustands des Dichtrings 1 umfasst.

Im hier gezeigten Schnitt betrachtet, weist der Mantel 7 insgesamt eine konstante Materialstärke 9, 10, 11 auf. Die Materialstärke 9 der Dichtlippe 2 im Bereich der Messstelle 23 entspricht der Materialstärke 10 außerhalb der Messstelle 23.

Um äußere Störkapazitäten, zum Beispiel vom Gehäuse 24 oder vom abzudichtenden Medium 25, von der Messstelle 23 fern zu halten, ist die erfindungsgemäße Dichtungsanordnung mit dem erfindungsgemäßen Dichtring vorgesehen.

In Figur 2 ist ein Ausführungsbeispiel der erfindungsgemäßen Dichtungsanordnung mit einem erfindungsgemäßen Dichtring gezeigt.
Im Gegensatz zum Dichtring 1 aus Figur 1 weist der Dichtring 1 aus Figur 2 einen Mantel 7 auf, bei dem, im hier dargestellten Schnitte betrachtet, die Materialstärke 9 der Dichtlippe 2 in radialer Richtung 14 geringer als die Materialstärke 10, 11 des übrigen Mantels 7 ist. Durch die relativ größere Materialstärke 10, 11 außerhalb der Messstelle 23 wird die elektrische Messvorrichtung 13 von störenden elektrischen Einflüssen abgeschirmt. Das Messergebnis ist dadurch sehr viel genauer und lässt zuverlässige Rückschlüsse auf den jeweils aktuellen Zustand des Dichtrings, insbesondere den Zustand der Dichtlippe 2, zu.

Im hier gezeigten Ausführungsbeispiel hat der übrige Mantel 7 eine größte Materialstärke 11, wobei das Verhältnis aus größter Materialstärke 11 zur Materialstärke 9 der Dichtlippe 2 etwa 7 bis 8 beträgt.
Ausgehend von der Dichtlippe 2 nimmt die Materialstärke 10, 11 des Mantels 7 in radialer 14 und axialer Richtung 15 stetig zu, so lange, bis der elektrisch isolierende Mantel 7 in die sich in radialer Richtung 14 erstreckenden Stirnseiten 16, 17 übergeht. Auf den Stirnseiten 16, 17 ist die Materialstärke 10, 11 des Mantels 7 konstant und maximal.

Die Stirnseiten 16, 17 haben jeweils ungefähr eine axiale Dicke 18, 19 die der axialen Dicke 20 des Kerns 5 entspricht. Dadurch wird der Kern 5 besonders gut vor dem Einfluss unerwünschter Störkapazitäten abgeschirmt.

Der Dichtring 1 ist besonders einfach und kostengünstig herstellbar und außerdem prozesssicher montierbar, auch deshalb, weil er, in axialer Richtung 15 mittig, eine gedachte Radialebene 21 aufweist, zu der er symmetrisch ausgebildet ist.

Durch den Verschleißdetektor 12 mit seiner elektrischen Messvorrichtung 13, die als kapazitive Messvorrichtung 22 ausgebildet ist, kann die Materialstärke 9 der Dichtlippe 2 in radialer Richtung kontinuierlich erfasst werden. Die Messstelle 23 wird in radialer Richtung 14 beiderseits der Dichtlippe 2 durch die abzudichtende Oberfläche 4 radial einerseits und den Kern 5 radial andererseits begrenzt, wobei die abzudichtende Oberfläche 4 und der Kern 5 jeweils aus einem elektrisch leitfähigen Werkstoff bestehen.

## Patentansprüche

1. Dichtungsanordnung, umfassend einen Dichtring (1) mit zumindest einer dynamisch beanspruchten Dichtlippe (2) und ein abzudichtendes Maschinenelement (3) mit einer abzudichtenden Oberfläche (4), die elektrisch leitfähig und von der Dichtlippe (2) mit radialer Vorspannung dichtend umschlossen ist, wobei der Dichtring (1) einen Kern (5) aus einem elektrisch leitfähigen Werkstoff (6) und einen Mantel (7) aus einem elektrisch isolierenden Werkstoff (8) aufweist, wobei der Mantel (7) eine Materialstärke (9,10, 11) aufweist, den Kern (5) zumindest teilweise umschließt und die Dichtlippe (2) umfasst und einen Verschleißdetektor (12), umfassend eine elektrische Messvorrichtung (13) zur Erfassung des Verschleißzustands des Dichtrings (1), **dadurch gekennzeichnet, dass**, der Dichtring (1) so gefertigt wird, dass, im Schnitt betrachtet, die Materialstärke (9) der Dichtlippe (2) in radialer Richtung (14) geringer als die Materialstärke (10, 11) des übrigen Mantels (7) ist, wobei der Mantel (7), im Schnitt betrachtet, im wesentlichen U-förmig ausgebildet ist und zwei sich im Wesentlichen in radialer Richtung (14) erstreckende Stirnseiten (16, 17) aufweist, zwischen denen, in axialer Richtung (15) betrachtet, der Kern (5) angeordnet ist, und, wobei die Stirnseiten (16, 17) jeweils eine axiale Dicke (18, 19) aufweisen, die im Wesentlichen der axialen Dicke (20) des Kerns (5) entspricht.

2. Dichtungsanordnung nach Anspruch 1, **dadurch gekennzeichnet, dass** der übrige Mantel (7) eine größte Materialstärke (11) aufweist und dass das Verhältnis aus größter Materialstärke (11) zur Materialstärke (9) der Dichtlippe (2) zumindest 5 beträgt.

3. Dichtungsanordnung nach Anspruch 2, **dadurch gekennzeichnet, dass** das Verhältnis 5 bis 10 beträgt.

4. Dichtungsanordnung nach einem der Ansprüche 1 bis 3, **dadurch gekennzeichnet, dass** die Materialstärke (9, 10, 11) des Mantels (7), ausgehend von der Dichtlippe (2), in radialer (14) und/oder axialer Richtung (15), zumindest anfangs, stetig zunimmt.

5. Dichtungsanordnung nach einem der Ansprüche 1 bis 4, **dadurch gekennzeichnet, dass** der Kern (5) kreisringförmig ausgebildet ist und auf der der Dichtlippe (2) radial zugewandten Seite, im Schnitt betrachtet, eine zur Dichtlippe (2) im Wesentlichen kongruente Gestalt aufweist.

6. Dichtungsanordnung nach einem der Ansprüche 1 bis 5, **dadurch gekennzeichnet, dass** der Kern (5) auf der der Dichtlippe (2) radial zugewandten Seite, im Schnitt betrachtet, im Wesentlichen kegelförmig ausgebildet ist.

7. Dichtungsanordnung nach einem der Ansprüche 1 bis 6, **dadurch gekennzeichnet, dass** der Dichtring (2) in axialer Richtung (15) mittig eine gedachte Radialebene (21) aufweist und symmetrisch zur Radialebene (21) ausgebildet ist.

8. Dichtungsanordnung nach einem der Ansprüche 1 bis 7, **dadurch gekennzeichnet, dass** die elektrische Messvorrichtung (13) als kapazitive Messvorrichtung (22) zur kontinuierlichen Erfassung der Materialstärke (9) der Dichtlippe (2) in radialer Richtung (14) ausgebildet ist.

9. Dichtungsanordnung nach Anspruch 8, **dadurch gekennzeichnet, dass** die kapazitive Messvorrichtung (22) eine Messstelle (23) umfasst, die in radialer Richtung (14) beiderseits der Dichtlippe (2) durch die abzudichtende Oberfläche (4) radial einerseits und den Kern (5) radial andererseits begrenzt ist.

10. Dichtring (1) mit zumindest einer dynamisch beanspruchbaren Dichtlippe (2), wobei der Dichtring (1) einen Kern (5) aus einem elektrisch leitfähigen Werkstoff (6) und einen Mantel (7) aus einem elektrisch isolierenden Werkstoff (8) aufweist, wobei der Mantel (7) eine Materialstärke (9,10, 11) aufweist, den Kern (5) zumindest teilweise umschließt und die Dichtlippe (2) umfasst und mit einem Verschleißdetektor (12), umfassend eine elektrische Messvorrichtung (13) zur Erfassung des Verschleißzustands des Dichtrings (1), **dadurch gekennzeichnet, dass**, der Dichtring (1) so gefertigt wird, dass, im Schnitt betrachtet, die Materialstärke (9) der Dichtlippe (2) in radialer Richtung (14) geringer als die Materialstärke (10, 11) des übrigen Mantels (7) ist, wobei der Mantel (7), im Schnitt betrachtet, im wesentlichen U-förmig ausgebildet ist und zwei sich im Wesentlichen in radialer Richtung (14) erstreckende Stirnseiten (16, 17) aufweist, zwischen denen, in axialer Richtung (15) betrachtet, der Kern (5) angeordnet ist, und, wobei die Stirnseiten (16, 17) jeweils eine axiale Dicke (18, 19) aufweisen, die im Wesentlichen der axialen Dicke (20) des Kerns (5) entspricht.

## Claims

1. Sealing arrangement, comprising a sealing ring (1) having at least one dynamically loaded sealing lip (2), and a machine element (3) to be sealed having a surface (4) to be sealed, said surface being electrically conductive and sealingly enclosed by the sealing lip (2) with radial prestressing, wherein the sealing ring (1) has a core (5) composed of an electrically conductive material (6) and a casing (7) composed of an electrically insulating material (8), wherein the casing (7) has a material thickness (9, 10, 11), at least partially encloses the core (5) and comprises the sealing lip (2), and a wear detector (12), comprising an electric measurement device (13) for detecting the wear state of the sealing ring (1), **characterized in that** the sealing ring (1) is produced in such a way that, as viewed in section, the material thickness (9) of the sealing lip (2) in the radial direction (14) is smaller than the material thickness (10, 11) of the remaining casing (7), wherein the casing (7), as viewed in section, is substantially U-shaped in form and has two end sides (16, 17) which extend substantially in the radial direction (14) and between which, as viewed in the axial direction (15), the core (5) is arranged, and wherein the end sides (16, 17) each have an axial thickness (18, 19) which corresponds substantially to the axial thickness (20) of the core (5).

2. Sealing arrangement according to Claim 1, **characterized in that** the remaining casing (7) has a largest material thickness (11), and **in that** the ratio of largest material thickness (11) to the material thickness (9) of the sealing lip (2) is at least 5.

3. Sealing arrangement according to Claim 2, **characterized in that** the ratio is from 5 to 10.

4. Sealing arrangement according to one of Claims 1 to 3, **characterized in that**, starting from the sealing lip (2), the material thickness (9, 10, 11) of the casing (7) constantly increases, at least initially, in the radial direction (14) and/or axial direction (15) .

5. Sealing arrangement according to one of Claims 1 to 4, **characterized in that** the core (5) is circular-ring-shaped in form and, on the side radially facing the sealing lip (2), as viewed in section, has a shape which is substantially congruent to the sealing lip (2).

6. Sealing arrangement according to one of Claims 1 to 5, **characterized in that**, on the side radially facing the sealing lip (2), as viewed in section, the core (5) is substantially conical in form.

7. Sealing arrangement according to one of Claims 1 to 6, **characterized in that** the sealing ring (2) has an imaginary radial plane (21) in the centre in the axial direction (15) and is formed symmetrically to the radial plane (21).

8. Sealing arrangement according to one of Claims 1 to 7, **characterized in that** the electric measuring device (13) is designed as a capacitive measuring device (22) for continuously detecting the material thickness (9) of the sealing lip (2) in the radial direction (14).

9. Sealing arrangement according to Claim 8, **characterized in that** the capacitive measuring device (22) comprises a measuring point (23) which is delimited in the radial direction (14), on both sides of the sealing lip (2), radially on the one side by the surface (4) to be sealed and radially on the other side by the core (5).

10. Sealing ring (1) having at least one dynamically loadable sealing lip (2), wherein the sealing ring (1) has a core (5) composed of an electrically conductive material (6) and a casing (7) composed of an electrically insulating material (8), wherein the casing (7) has a material thickness (9, 10, 11), at least partially encloses the core (5) and comprises the sealing lip (2), and having a wear detector (12), comprising an electric measuring device (13) for detecting the wear state of the sealing ring (1), **characterized in that** the sealing ring (1) is produced in such a way that, as viewed in section, the material thickness (9) of the sealing lip (2) in the radial direction (14) is smaller than the material thickness (10, 11) of the remaining casing (7), wherein the casing (7), as viewed in section, is substantially U-shaped in form and has two end sides (16, 17) which extend substantially in the radial direction (14) and between which, as viewed in the axial direction (15), the core (5) is arranged, and wherein the end sides (16, 17) each have an axial thickness (18, 19) which substantially corresponds to the axial thickness (20) of the core (5).

## Revendications

1. Dispositif d'étanchéité, comprenant une bague d'étanchéité (1) dotée d'au moins une lèvre d'étanchéité (2) sollicitée de manière dynamique et un élément de machine à sceller (3) doté d'une surface à sceller (4), laquelle est électriquement conductrice et est entourée de manière étanche par la lèvre d'étanchéité (2) avec une précontrainte radiale, dans lequel la bague d'étanchéité (1) comporte un noyau (5) fait d'un matériau électriquement conducteur (6) et une enveloppe (7) faite d'un matériau électriquement isolant (8), dans lequel l'enveloppe (7) comporte une épaisseur de matériau (9, 10, 11), laquelle entoure au moins partiellement le noyau (5) et comprend la lèvre d'étanchéité (2), et un détecteur d'usure (12), comprenant un dispositif de mesure électrique (13) permettant de saisir l'état d'usure de la bague d'étanchéité (1), **caractérisé en ce que** la bague d'étanchéité (1) est faite de telle sorte que, vue en coupe, l'épaisseur de matériau (9) de la lèvre d'étanchéité (2) est, dans la direction radiale (14), inférieure à l'épaisseur de matériau (10, 11) du reste de l'enveloppe (7), dans lequel l'enveloppe (7), vue en coupe, est réalisée essentiellement en forme de U et comporte deux faces frontales (16, 17) s'étendant essentiellement dans la direction radiale (14), entre lesquelles, vu dans la direction axiale (15), le noyau (5) est agencé, et dans lequel les faces frontales (16, 17) possèdent respectivement une épaisseur axiale (18, 19), laquelle correspond essentiellement à l'épaisseur axiale (20) du noyau (5).

2. Dispositif d'étanchéité selon la revendication 1, **caractérisé en ce que** le reste de l'enveloppe (7) possède une épaisseur de matériau (11) plus élevée et **en ce que** le rapport de l'épaisseur de matériau (11) plus élevée à l'épaisseur de matériau (9) de la lèvre d'étanchéité (2) vaut au moins 5.

3. Dispositif d'étanchéité selon la revendication 2, **caractérisé en ce que** le rapport vaut de 5 à 10.

4. Dispositif d'étanchéité selon l'une des revendications 1 à 3, **caractérisé en ce que** l'épaisseur de matériau (9, 10, 11) de l'enveloppe (7) augmente de façon constante, au moins initialement, à partir de la lèvre d'étanchéité (2) dans la direction radiale (14) et/ou dans la direction axiale (15).

5. Dispositif d'étanchéité selon l'une des revendications 1 à 4, **caractérisé en ce que** le noyau (5) est réalisé sous forme de bague circulaire et, vu en coupe, comporte sur le côté tourné radialement vers la lèvre d'étanchéité (2) une forme essentiellement congruente à la lèvre d'étanchéité (2).

6. Dispositif d'étanchéité selon l'une des revendications 1 à 5, **caractérisé en ce que** le noyau (5) est, vu en coupe, réalisé de forme essentiellement conique sur le côté tourné radialement vers la lèvre d'étanchéité (2).

7. Dispositif d'étanchéité selon l'une des revendications 1 à 6, **caractérisé en ce que** la bague d'étanchéité (2) possède un plan radial (21) imaginé au milieu dans la direction axiale (15) et est réalisée symétriquement par rapport au plan radial (21).

8. Dispositif d'étanchéité selon l'une des revendications 1 à 7, **caractérisé en ce que** le dispositif de mesure électrique (13) est réalisé comme un dispositif de mesure capacitif (22) permettant la saisie en continu de l'épaisseur de matériau (9) de la lèvre d'étanchéité (2) dans la direction radiale (14).

9. Dispositif d'étanchéité selon la revendication 8, **caractérisé en ce que** le dispositif de mesure capacitif (22) comprend un point de mesure (23), lequel est délimité dans la direction radiale (14) des deux côtés de la lèvre d'étanchéité (2) par la surface à sceller (4) radialement d'un côté et par le noyau (5) radialement de l'autre côté.

10. Bague d'étanchéité (1) dotée d'au moins une lèvre d'étanchéité (2) sollicitée de manière dynamique, la bague d'étanchéité (1) comportant un noyau (5) fait d'un matériau électriquement conducteur (6) et une enveloppe (7) faite d'un matériau électriquement isolant (8), dans laquelle l'enveloppe (7) comporte une épaisseur de matériau (9, 10, 11), laquelle entoure au moins partiellement le noyau (5) et comprend la lèvre d'étanchéité (2), et dotée d'un détecteur d'usure (12), comprenant un dispositif de mesure électrique (13) permettant de saisir l'état d'usure de la bague d'étanchéité (1), **caractérisée en ce que** la bague d'étanchéité (1) est faite de telle sorte que, vue en coupe, l'épaisseur de matériau (9) de la lèvre d'étanchéité (2) est, dans la direction radiale (14), inférieure à l'épaisseur de matériau (10, 11) du reste de l'enveloppe (7), dans laquelle l'enveloppe (7), vue en coupe, est réalisée essentiellement en forme de U et comporte deux faces frontales (16, 17) s'étendant essentiellement dans la direction radiale (14), entre lesquelles, vu dans la direction axiale (15), le noyau (5) est agencé, et dans laquelle les faces frontales (16, 17) possèdent respectivement une épaisseur axiale (18, 19), laquelle correspond essentiellement à l'épaisseur axiale (20) du noyau (5).
